# EUROPEAN PATENT SPECIFICATION

(11) **EP 3 002 911 B1**
(45) Date of publication and mention of the grant of the patent: **27.10.2021**
(21) Application number: 15184382.8
(22) Date of filing: 09.09.2015
(51) Int. Cl.: H04L 12/58

(54) **COMMUNICATION MESSAGE RECOGNITION METHOD AND DEVICE THEREOF**
KOMMUNIKATIONSNACHRICHTERKENNUNGSVERFAHREN UND VORRICHTUNG DAFÜR
PROCÉDÉ DE RECONNAISSANCE DE MESSAGE DE COMMUNICATION ET DISPOSITIF ASSOCIÉ

(30) Priority: 30.09.2014 CN 201410520101
(43) Date of publication of application: 06.04.2016
(73) Proprietor: Xiaomi Inc., Beijing 100085 (CN)
(72) Inventor: LIU, Huiyun, 100085 BEIJING (CN); WANG, Guangjian, 100085 BEIJING (CN); WANG, Zhiyong, 100085 BEIJING (CN)
(74) Representative: Cabinet Beau de Loménie

(56) References cited:
- WO-A2-2006/113797
- CN-A- 1 885 967
- CN-A- 103 237 295
- None

## Description

### TECHNICAL FIELD

The present disclosure relates to the field of data analysis technique, and more particularly, to a communication message recognition method and a device thereof.

### BACKGROUND

At present, either an individual user or a merchant widely uses short messages (or SMS messages) for communication. However, there is large difference between a merchant SMS number and an individual user SMS number, and one merchant SMS number may include several different numbers during sending SMS messages, which causes great recognition difficulty to users.

In related technologies, in order to facilitate a user to recognize the merchant who sent an SMS message, related public merchant numbers may be artificially collected, and merchant SMS numbers and artificially verified names may be stored in a yellow page database. When a terminal receives an SMS message from a stranger, it may acquire the message sender's number and query the yellow page database with this number, and display on the user terminal a preset merchant name corresponding to the number of the sender.

In the process of realizing the present disclosure, it was found that the related technologies have following disadvantages: it is difficult to timely refresh the preset yellow page database as related public merchant numbers needs to be collected artificially. This leads to a low recognition rate or a high recognition error ratio.

Document WO 2006/113797 discloses a sender identification system and method, document CN 1 885 967 discloses a method for adding a name of a sender in a message, and document CN 103 237 295 discloses a method for displaying the name of a sender when an electronic message is received.

### SUMMARY

In order to solve the problem in related technologies that it is difficult to timely refresh a preset yellow page database thus leading to a high recognition error ratio, the present disclosure provides a communication message recognition method and a device thereof. The invention is defined by a communication message recognition method according to claim 1, a communication message recognition device according to claim 3, a computer program according to claim 5 and a recording medium according to claim 6. Further embodiments are defined by the dependent claims. The technical solution is as below:
According to a first aspect, the invention relates to a communication message recognition method, comprising:
receiving a communication message, which comprises text content and a number of a sender who sends the communication message;
analyzing the text content of the communication message and acquiring a user name corresponding to the number of the communication message sender; and
determining the user name as a name of the communication message sender and displaying the name of the sender in the communication message,
characterized in that
the step of analyzing the text content of the communication message and acquiring a user name corresponding to the number of the communication message sender comprises:
   detecting whether the text content of the communication message has a preset designator for highlighting a certain text content; and
   sending both the certain text content of the preset designator and the number of the sender to a server if the text content of the communication message has the preset designator, and receiving the user name corresponding to the number of the sender fed back by the server, the user name being acquired by the server by making a comparison between the certain text content of the preset designator and a user name in a name database.

Optionally, the method further comprises:
sending the number of the sender and a corresponding relationship between the number of the sender and the user name corresponding to the number of the sender to a server configured to store the corresponding relationship in a corresponding relational database comprising at least one set of corresponding relationship comprising a sender's number and a user name corresponding to the number of the sender.

According to a second aspect, the invention relates to a communication message recognition device, comprising:
a receiving module, configured to receive a communication message comprising a text content and a number of a sender who sends the communication message;
an analysis module, configured to analyze the text content of the communication message received by the receiving module, thus acquiring a user name corresponding to the number of the communication message sender; and
a display module, configured to determine the user name acquired by the analysis module upon analysis as a name of the communication message sender and to display the name of the sender in the communication message, characterized in that
the analysis module comprises:
   a second detection submodule, configured to detect whether the text content of the communication message has a preset designator for highlighting a certain text content; and
   a first receiving submodule, configured to send both the certain text content of the preset designator and the number of the sender to a server if the second detection submodule detects that the text content of the communication message has the preset designator, and to receive the user name corresponding to the number of the sender fed back by the server, the user name being acquired by the server by making a comparison between the certain text content of the preset designator and a user name in a name database.

Optionally, the device further comprises:
a sending module, configured to send the number of the sender and a corresponding relationship between the number of the sender and the user name corresponding to the number of the sender to a server for storing the corresponding relationship in a corresponding relational database comprising at least one set of corresponding relationship including a sender's number and a user name corresponding to the number of the sender.

The invention is also directed to a computer program for executing the steps of a communication message recognition method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the disclosure may have the following beneficial effects:
A user name corresponding to a number of a sender who sends the communication message is acquired by receiving a communication message and analyzing the text content of the communication message, and the user name is determined as the communication message sender's name and is displayed. The communication message recognition method can acquire a user name according to the text content of a communication message, thus solving the problem that it is difficult to timely refresh a preset yellow page database thus leading to a high recognition error ratio, and reaching an effect of improving accuracy in recognition of communication messages.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an implementation environment of a communication message recognition method according to exemplary embodiments.
Fig. 2 is a flow chart of a communication message recognition method according to an exemplary embodiment.
Fig. 3A is a flow chart of a communication message recognition method according to another exemplary embodiment.
Fig. 3B is a schematic diagram illustrating how a terminal displays a user name according to an exemplary embodiment.
Fig. 4A is a flow chart of a communication message recognition method according to a further exemplary embodiment.
Fig. 4B is a schematic diagram illustrating how a terminal displays a user name according to an exemplary embodiment.
Fig. 5A is a flow chart of a communication message recognition method according to a still further exemplary embodiment.
Fig. 5B is a schematic diagram illustrating how a terminal displays a user name according to an exemplary embodiment.
Fig. 6A is a flow chart of a communication message recognition method according to another exemplary embodiment.
Fig. 6B is a schematic diagram illustrating how a terminal displays a user name according to an exemplary embodiment.
Fig. 7 is a block diagram of a communication message recognition device according to an exemplary embodiment.
Fig. 8 is a block diagram of a communication message recognition device according to another exemplary embodiment.
Fig. 9 is a block diagram of a communication message recognition device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

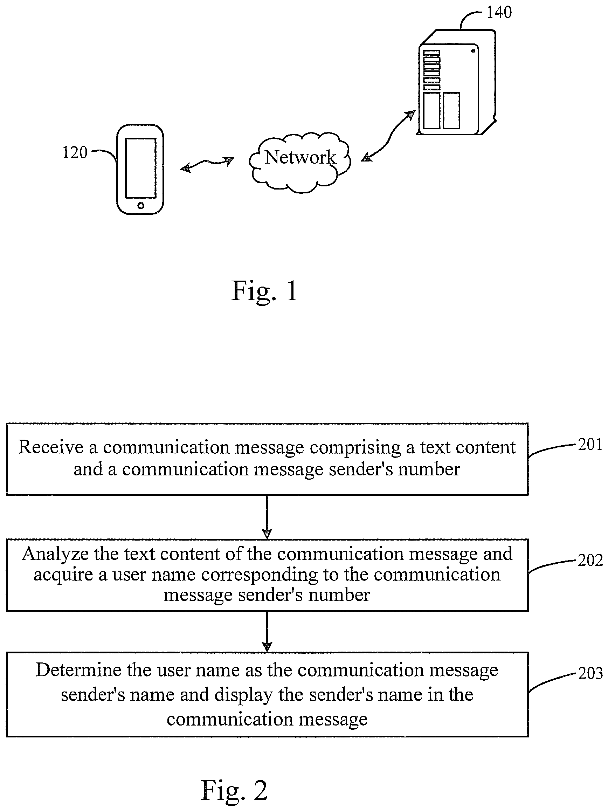

Fig. 1 is a schematic diagram illustrating an implementation environment of a communication message recognition method according to exemplary embodiments. As shown in Fig. 1, the implementation environment may comprise a terminal 120 and a server 140.

The terminal 120 may be an electronic device for receiving and saving a communication message. And the electronic device may be a smart mobile phone, a tablet computer, a smart television, an e-book reader, a multimedia player, a laptop computer, a desktop computer or the like.

The terminal 120 is connected to the server 140 through wireless network or wired network.

The server 140 may be a server configured to analyze a communication message and acquire a user name. The server 140 may be a server, or a server cluster including a plurality of servers, or a cloud computing service center.

Fig. 2 is a flow chart of a communication message recognition method according to an exemplary embodiment. As shown in Fig. 2, the communication message recognition method may be applied to a terminal capable of receiving a communication message, such as a smart mobile phone, a tablet computer, a smart television, an e-book reader, a multimedia player, a laptop computer, a desktop computer and so on. The communication message recognition method includes following steps implemented by the terminal.

In Step 201, a communication message is received, which includes text content and a number of a sender who sends the communication message.

In Step 202, the text content of the communication message is analyzed and a user name corresponding to the number of the communication message sender is acquired.

In Step 203, the user name is determined as the communication message sender's name and the sender's name is displayed in the communication message.

The communication message recognition method described above, by acquiring a user name corresponding to a number of a sender who sends the communication message by receiving a communication message and analyzing the text content of the communication message, can determine the user name as the communication message sender's name and display it. This method solves the problem that it is difficult to timely refresh a preset yellow page database, and thus leads to a high recognition error ratio, and reaches an effect of improving accuracy in recognition of communication messages.

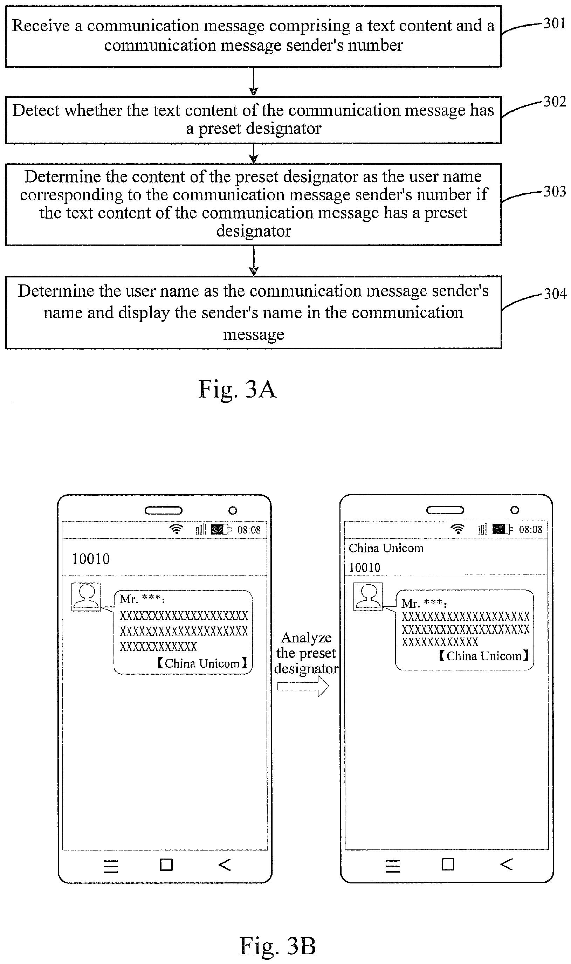

Fig. 3A is a flow chart of a communication message recognition method according to another exemplary embodiment. As shown in Fig. 3A, the communication message recognition method may be applied to a terminal capable of receiving a communication message, such as a smart mobile phone, a tablet computer, a smart television, an e-book reader, a multimedia player, a laptop computer, a desktop computer and so on. The communication message recognition method includes following steps implemented by the terminal.

In Step 301, a communication message is received, which includes text content and a number of a sender who sends the communication message.

The communication message mentioned herein may be a message communicated in the form of text, for example, an SMS message.

In Step 302, it is detected whether the text content of the communication message has a preset designator.

The preset designator mentioned herein refers to symbols for highlighting a certain text content so as to distinguish the text content from other texts. For example, a user name necessary to be highlighted is marked by preset designators such as "**[ ]**", "[ ]" or"()" in the text content. For example, if "China Unicom" needs highlighting, it may be indicated as " **[**China Unicom**]** ", "[China Unicom]" or "(China Unicom)", etc.

It should be explained that a preset designator may also be an underline, a wavy line, or double quotation marks and the like. The present embodiment does not limit the type of a preset designator.

In Step 303, the content of the preset designator is determined as the user name corresponding to the number of the communication message sender if the text content of the communication message has a preset designator.

After detecting that the text content of the communication message has a preset designator, the terminal extracts the content of the preset designator and determines the content extracted as the user name corresponding to the number of the communication message sender.

For example, during detecting the text content of a communication message with a sender's number of 10010, the terminal finds a preset designator "**[ ]**", the terminal extracts the content ("China Unicom") of " **[ ]** " and determines "China Unicom" as the user name corresponding to the number of the sender 10010.

In Step 304, the user name is determined as the communication message sender's name and the sender's name is displayed in the communication message.

The terminal determines the user name extracted from a preset designator as a communication message sender's name and replaces a sender's number in a corresponding communication message by the sender's name for display. Optionally, the terminal may also simultaneously display the sender's name and a sender's number corresponding to the sender's name so as to facilitate a user viewing the number of the sender.

For example, Fig. 3B shows a schematic diagram illustrating how a terminal displays a user name according to an exemplary embodiment. As shown in Fig. 3B, after receiving the communication message sent by the number of the sender 10010, the terminal detects the text content of the communication message and finds that a preset designator " **[ ]** " exists in the text content, and the terminal extracts the content (i.e., "China Unicom") of the preset designator " **[ ]** ". At the moment, the terminal determines "China Unicom" as the communication message sender's name, and displays the sender's name "China Unicom" in an area for displaying a sender's number in the communication message. Meanwhile, in order to facilitate users viewing the number of the sender corresponding to the sender's name, the terminal reserves the number of the communication message sender 10010 in the area for displaying a sender's number, and displays it below the sender's name "China Unicom" .

It is worth explaining that the communication message recognition method provided in the present embodiment is particularly applicable to the case in which the message sender is a merchant. Generally, when a merchant sends a communication message of notice type to an individual user, the sender's name of the current message is marked with " **[ ]** " at the end of the message content. According to the method provided in the present embodiment, when a message from a unknown merchant is received, a name in " **[ ]** " at the end of the message content may be determined as the message sender's name, which may be displayed to a user, thus reaching an effect of identifying the sender's name.

The communication message recognition method described above, by acquiring a user name corresponding to a number of a sender who sends the communication message by receiving a communication message and analyzing the text content of the communication message, can determine the user name as the communication message sender's name and display it. This method solves the problem that it is difficult to timely refresh a preset yellow page database, and thus leads to a high recognition error ratio, and reaches an effect of improving accuracy in recognition of communication messages.

The communication message recognition method described above, by detecting that the text content of a communication message has a preset designator, can determine the content of the preset designator as a user name corresponding to a number of a sender who sends the communication message. This method solves the problem that for determining the user name corresponding to a number of a sender who sends the communication message it is necessary to send the number of the sender to a server for making a comparison in the database thus acquiring the user name (which is not only cumbersome in steps but also wastes time), and thus reaches an effect of improving efficiency in recognition of communication messages.

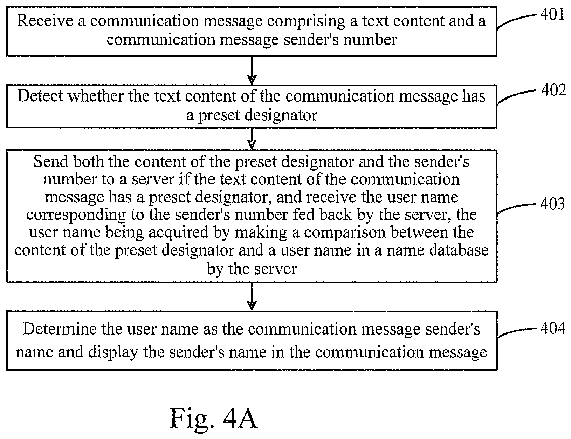

In a usage scenario, when a communication message has at least two or two pairs of preset designators, there are two or more than two contents of the preset designators acquired. If these contents are different, in order to further improve the accuracy, the terminal may send these contents of the preset designators to a server, and the server will judge which content may serve as the user name. Please refer to Fig. 4A for details.

Fig. 4A is a flow chart of a communication message recognition method according to another exemplary embodiment. As shown in Fig. 4A, the communication message recognition method may be applied to a terminal 120 in the implementation environment as shown in Fig. 1, including following steps implemented by the terminal.

In Step 401, a communication message is received, which includes text content and a number of a sender who sends the communication message.

The communication message mentioned herein may be a message communicated in the form of text, for example, an SMS message.

In Step 402, it is detected whether the text content of the communication text message has a preset designator.

The preset designator mentioned herein refers to symbols for highlighting a certain text content so as to distinguish the text content from other texts. For example, a user name necessary to be highlighted is marked by preset designators such as "**[ ]**", "[ ]" or"()" in text content. For example, if "China Unicom" needs highlighting, it may be indicated as " **[**China Unicom**]** ", "[China Unicom]" or "(China Unicom)", etc.

It should be explained that a preset designator may also be an underline, a wavy line, or double quotation marks and the like. The present embodiment does not limit the type of a preset designator.

In Step 403, both the content of the preset designator and the number of the sender are sent to a server if the text content of the communication message has a preset designator, and then the user name corresponding to the number of the sender fed back by the server is received. The user name is acquired by the server by making a comparison between the content of the preset designator and a user name in a name database.

After detecting that the text content of the communication message has a preset designator, the terminal extracts the content of the preset designator and sends the content extracted and the number of the sender to the server.

After receiving the content of the preset designator and the number of the sender sent by the terminal, the server detects the content of the preset designator, thus determining whether the content of the preset designator is matched with a user name stored in the name database.

The name database stores at least one user name, and stores an associated word corresponding to each user name. The associated word is a participle associated to a user name, and a user name may be corresponding to a plurality of associated words. For example, a user name is "China Unicom", associated words corresponding to the user name may be "Beijing Unicom", "Shanghai Unicom" and "Unicom users", etc.

After acquiring the content of a preset designator, the server may directly match the content with a user name stored in the name database, or match the content with an associated word corresponding to a user name stored in the name database.

If the content of a preset designator is matched with a user name stored in the name database or an associated word corresponding to the user name, the server determines the content of the preset designator as a user name, and acquires a user name matched with the content of the preset designator, or acquires a user name corresponding to an associated word matched with the content of the preset designator.

After determining the user name, the server feeds back the user name and the number of the sender corresponding to the user name to the terminal, so the terminal receives the user name corresponding to the number of the sender.

In Step 404, the user name is determined as the communication message sender's name and the sender's name is displayed in the communication message.

After receiving a user name corresponding to a sender's number fed back by the server, the terminal determines the user name as a communication message sender's name and replaces a sender's number in a corresponding communication message by the sender's name for display. Optionally, the terminal may also simultaneously display the sender's name and a sender's number corresponding to the sender's name so as to facilitate a user viewing the number of the sender.

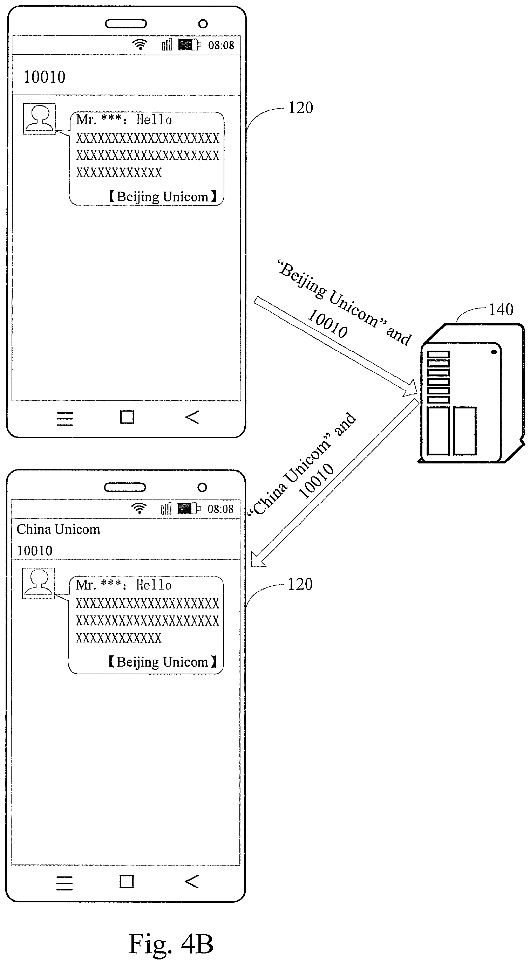

For example, Fig. 4B shows a schematic diagram illustrating how a terminal displays a user name according to an exemplary embodiment. As shown in Fig. 4B, after receiving the communication message sent by the number of the sender 10010, the terminal 120 detects the text content of the communication message and finds that a preset designator" [ ] " exists in the text content, and the terminal 120 extracts the content (i.e., "Beijing Unicom") of the preset designator" [ ] ". The terminal 120 sends "Beijing Unicom" extracted and the number of the sender 10010 to the server 140. After receiving "Beijing Unicom" and the number of the sender 10010, the server 140 matches "Beijing Unicom" with a user name in the name database and acquires a user name "China Unicom", at the moment, the server 140 feeds the user name "China Unicom" acquired from matching and the number of the sender 10010 back to the terminal 120. After receiving the user name "China Unicom" and the number of the sender 10010, the terminal 120 determines the user name "China Unicom" as the sender's name, and displays the sender's name "China Unicom" in the area for displaying a sender's number in the communication message. Meanwhile, in order to facilitate users viewing the number of the sender corresponding to the sender's name, the terminal 120 reserves the number of the communication message sender 10010 in the area for displaying a sender's number, and displays it below the sender's name "China Unicom".

The communication message recognition method described above, by acquiring a user name corresponding to a number of a sender who sends the communication message by receiving a communication message and analyzing the text content of the communication message, can determine the user name as the communication message sender's name and display it. This method solves the problem that it is difficult to timely refresh a preset yellow page database, and thus leads to a high recognition error ratio, and reaches an effect of improving accuracy in recognition of communication messages.

The communication message recognition method described above, by detecting that the text content of a communication message has a preset designator, sending both the content of the preset designator and the number of the sender to the server, receiving the user name corresponding to the number of the sender fed back by the server, can acquire a user name by the server according to the content of the preset designator sent to the server. This method solves the problem that the content of a preset designator may be not an accurate user name, and thus leads to communication message recognition error, and reaches an effect of improving accuracy in recognition of communication messages.

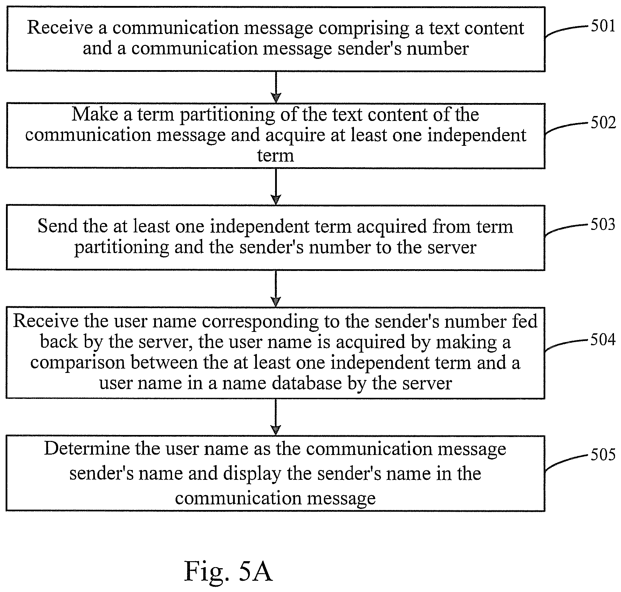

It can be known from embodiments of Figs. 3A and 4A that the terminal may acquire the communication message sender's name by means of the content of a preset designator in the text content of the communication message. In a possible embodiment, the terminal may conduct a term partitioning of the text content of the communication message, and acquire the communication message sender's name according to an independent term acquired from term partitioning. Please refer to the embodiment of Fig. 5A for concrete implementation.

Fig. 5A is a flow chart of a communication message recognition method according to a further exemplary embodiment. As shown in Fig. 5A, the communication message recognition method may applied to the terminal 120 in the implementation environment as shown in Fig. 1, including following steps implemented by the terminal.

In Step 501, a communication message is received, which includes text content and a number of a sender who sends the communication message.

The communication message mentioned herein may be a message communicated in the form of text, for example, an SMS message.

In Step 502, a term partitioning of the text content of the communication message is made and at least one independent term is acquired.

At the time of analyzing the text content of the communication message, the terminal may make a term partitioning of the text content of the communication message and acquire independent terms.

In Step 503, at least one independent term acquired from term partitioning and the number of the sender are sent to the server.

After conducting a term partitioning of the text content of the communication message and acquiring independent terms, the terminal sends these independent terms and the number of the sender to the server.

After receiving independent terms and the number of the sender, the server analyzes whether associated user names exist in these independent terms. At the moment, the server may match independent terms acquired with associated words stored in the name database. Once an independent term is matched with a certain associated word, the server determines that the independent term is associated with the user name corresponding to the associated word. And the server determines the user name as the user name corresponding to the number of the sender.

In Step 504, the user name corresponding to the number of the sender fed back by the server is received. The user name is acquired by the server by making a comparison between at least one independent term and a user name in a name database.

After determining the user name corresponding to the number of the sender according to independent terms received, the server feeds both the number of the sender and the user name corresponding to the number of the sender back to the terminal.

The terminal receives the number of the sender and the user name corresponding to the number of the sender.

In Step 505, the user name is determined as the communication message sender's name and the sender's name is displayed in the communication message.

After receiving the number of the sender and the user name corresponding to the number of the sender, the terminal determines the user name as the corresponding communication message sender's name, and replaces a sender's number in a corresponding communication message by the sender's name for display. Optionally, the terminal may also simultaneously display the sender's name and a sender's number corresponding to the sender's name so as to facilitate a user viewing the number of the sender.

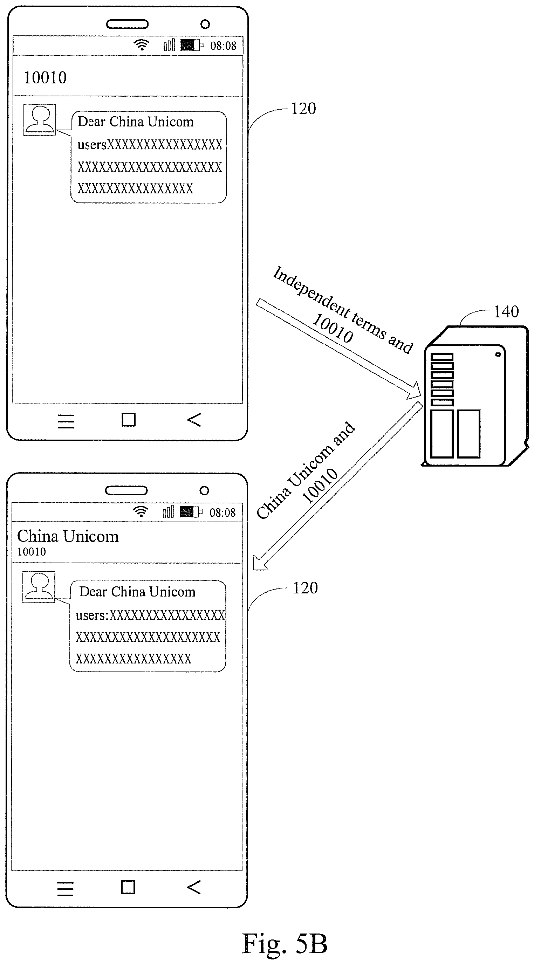

For example, Fig. 5B shows a schematic diagram illustrating how a terminal displays a user name according to an exemplary embodiment. As shown in Fig. 5B, after conducting a term partitioning of the text content and acquiring independent terms, the terminal 120 sends these independent terms and the number of the sender 10010 to the server 140. After receiving independent terms and the number of the sender 10010, the server 140 matches these independent terms with associated words stored in the name database, thus acquiring the user name "China Unicom" corresponding to the number of the sender 10010, and feeds the user name "China Unicom" and the corresponding sender's number 10010 back to the terminal 120. After receiving the user name "China Unicom" and the number of the sender 10010, the terminal 120 determines the user name "China Unicom" as the sender's name, and displays the sender's name "China Unicom" in the area for displaying a sender's number in the communication message. Meanwhile, in order to facilitate users viewing the number of the sender corresponding to the sender's name, the terminal 120 reserves the number of the sender 10010 of the communication message in the area for displaying a sender's number, and displays it below the sender's name "China Unicom".

The communication message recognition method described above, by acquiring a user name corresponding to a number of a sender who sends the communication message by receiving a communication message and analyzing the text content of the communication message, can determine the user name as the communication message sender's name and display it. Because a user name can be acquired according to the text content of a communication message, the problem that it is difficult to timely refresh a preset yellow page database is solved, thus leading to a high recognition error ratio, and reaching an effect of improving accuracy in recognition of communication messages.

The communication message recognition method described herein, by conducting a term partitioning of the text content of a communication message, sending at least one independent term acquired from term partitioning and the number of the sender to the server, can receive the user name corresponding to the number of the sender fed back by the server. This method solves the problem that it wastes time to establish a database in which the user name is corresponding to the number of the sender by establishing only a name database in the server, making judging and acquiring the user name corresponding to the number of the sender available and reaching an effect of improving efficiency in recognition of communication messages.

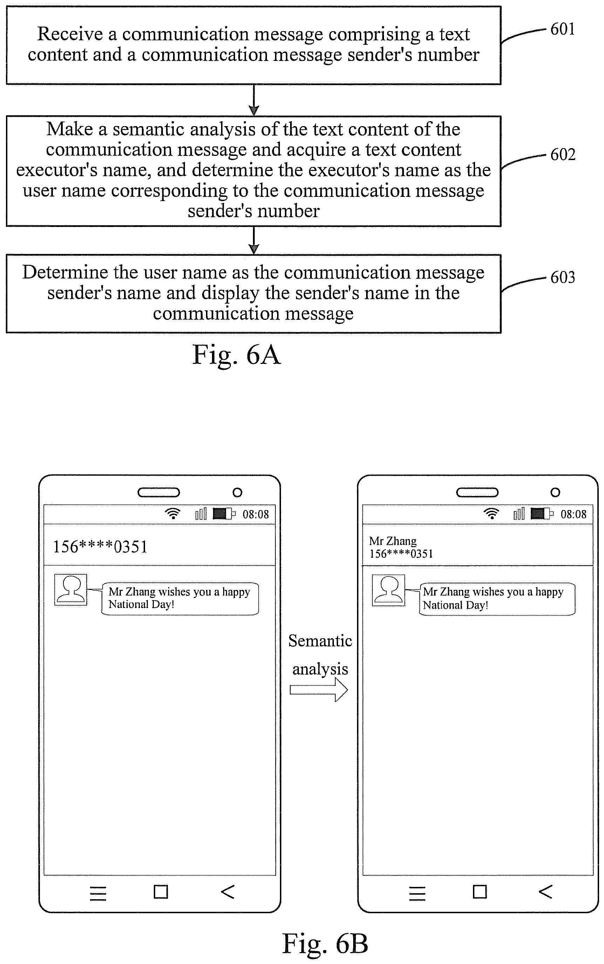

In a possible embodiment, the terminal may acquire an executor's name by making a semantic analysis of the text content of a communication message, and determine the executor's name as the user name corresponding to the communication message. Please refer to the embodiment in Fig. 6A for concrete implementation.

Fig. 6A is a flow chart of a communication message recognition method according to a further exemplary embodiment. As shown in Fig. 6A, the communication message recognition method may be applied to a terminal capable of receiving a communication message, for example, a smart mobile phone, a tablet computer, a smart television, an e-book reader, a multimedia player, a laptop computer, a desktop computer and the like. The communication message recognition method includes following steps implemented by the terminal.

In Step 601, a communication message is received, which includes text content and a number of a sender who sends the communication message.

The communication message mentioned herein may be a message communicated in the form of text, for example, a communication message.

In Step 602, a semantic analysis of the text content of the communication message is made and an executor's name of the text content is acquired, and the executor's name is determined as the user name corresponding to the number of the communication message sender.

After receiving the communication message, the terminal may make a semantic analysis of the text content of the communication message received via a semantic analysis model, so as to acquire an executor's name of the text content, and then determine the executor's name as the user name corresponding to the number of the communication message sender.

For example, the terminal receives such a communication message as "Mr. Zhang wishes you a happy National Day!" At the moment, the terminal makes a semantic analysis of the text content by means of the semantic analysis model, thus acquiring an executor's name of the text content "Mr. Zhang", and determines the executor's name "Mr. Zhang" as the user name corresponding to the number of the communication message sender.

Optionally, the terminal may make a semantic analysis by using a semantic analysis model which is acquired from a server providing a semantic analysis model. The server may conduct a training according to samples of known semantic information collected, thus acquiring a semantic analysis model.

In Step 603, the user name is determined as the communication message sender's name and the sender's name is displayed in the communication message.

The terminal determines the user name acquired from the semantic analysis model upon analysis as the communication message sender's name and displays the sender's name in the communication message.

For example, Fig. 6B shows a schematic diagram illustrating how a terminal displays a user name according to an exemplary embodiment. As shown in Fig. 6B, after receiving the communication message sent by the number of the sender 156^{∗∗∗∗}0351, the terminal acquires such text content as "Mr. Zhang wishes you a happy National Day!" The terminal makes a semantic analysis of the text content by means of the semantic analysis model, and acquires an executor's name of the text content "Mr. Zhang". At the moment, the terminal determines the executor's name "Mr. Zhang" as the user name corresponding to the number of the communication message sender, also determines the user name "Mr. Zhang" as the communication message sender's name, and displays the sender's name "Mr. Zhang" in the area for displaying a sender's number in the communication message. Meanwhile, in order to facilitate users viewing the number of the sender corresponding to the sender's name, the terminal reserves the number of the communication message sender 156^{∗∗∗∗}0351 in the area for displaying a sender's number, and displays it below the sender's name "Mr. Zhang".

The communication message recognition method described above, by acquiring a user name corresponding to a number of a sender who sends the communication message by receiving a communication message and analyzing the text content of the communication message, can determine the user name as the communication message sender's name and display it. This method solves the problem that it is difficult to timely refresh a preset yellow page database, and thus leads to a high recognition error ratio, and reaches an effect of improving accuracy in recognition of communication messages.

The communication message recognition method described above, by making a semantic analysis of the text content of a communication message and acquiring an executor's name of the text content, can determine the executor's name as a user name corresponding to a number of a sender who sends the communication message, not involved into a server and a large database because the user name can be determined by only making a semantic analysis of the text content, thus solving the problem that a server and a corresponding database are required for determining the user name corresponding to the number of the sender (which is not only cumbersome in steps but also wastes time), and reaching an effect of improving efficiency in recognition of communication messages.

It should be explained that the terminal may send the number of the sender and a corresponding relationship between the number of the sender and the user name corresponding to the number of the sender to the server, which stores the corresponding relationship in a corresponding relational database.

The corresponding relational database includes at least one set of corresponding relationship each of which includes a sender's number and a user name corresponding to the number of the sender.

Optionally, after acquiring the number of the sender and the corresponding relationship between the number of the sender and the user name corresponding to the number of the sender, the server does not directly store the corresponding relationship in the corresponding relational database, instead it may temporarily store the corresponding relationship, then make an analysis of sender's names and sender's numbers stored temporarily, and bound and store reliable sender's names and sender's numbers in the corresponding relational database.

It should also be explained that data transmission between the terminal and the server may be encrypted, and data storage at server-side may also be encrypted, thus preventing users' privacy leaks and guaranteeing user information security.

The following are embodiments of the device in the present disclosure, which may be configured to carry out the embodiments of the method in the present disclosure. Please refer to the embodiments of the method in the present disclosure with regard to undisclosed details about the embodiments of the device in the present disclosure.

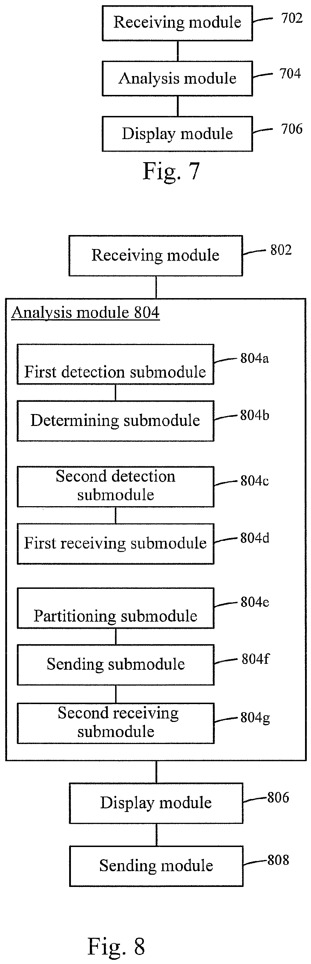

Fig. 7 is a block diagram of a communication message recognition device according to an exemplary embodiment. As shown in Fig. 7, the communication message recognition device may be located in a terminal capable of receiving a communication message, for example, a smart mobile phone, a tablet computer, a smart television, an e-book reader, a multimedia player, a laptop computer, a desktop computer and the like. The communication message recognition device includes but is not limited to: a receiving module 702, an analysis module 704 and a display module 706.

The receiving module 702 is configured to receive a communication message including text content and a number of a sender who sends the communication message.

The analysis module 704 is configured to analyze the text content of the communication message and acquire a user name corresponding to the number of the communication message sender.

The display module 706 is configured to determine the user name as the communication message sender's name and display the sender's name in the communication message.

The communication message recognition device described above, by acquiring a user name corresponding to a number of a sender who sends the communication message by receiving a communication message and analyzing the text content of the communication message, can determine the user name as the communication message sender's name and display it, thereby solving the problem that it is difficult to timely refresh a preset yellow page database thus leading to a high recognition error ratio, and reaching an effect of improving accuracy in recognition of communication messages.

Fig. 8 is a block diagram of a communication message recognition device according to another exemplary embodiment. As shown in Fig. 8, the communication message recognition device may be located in the terminal 120 of the implementation environment as shown in Fig. 1. The communication message recognition device may include but is not limited to: a receiving module 802, an analysis module 804 and a display module 806.

The receiving module 802 is configured to receive a communication message including text content and communication message sender's number.

The analysis module 804 is configured to analyze the text content of the communication message received by the receiving module 802, thus acquiring a user name corresponding to the number of the communication message sender.

The display module 806 is configured to determine the user name acquired by the analysis module 804 upon analysis as the communication message sender's name and to display the sender's name in the communication message.

In a possible embodiment, the analysis module 804 may comprise: a first detection submodule 804a and a determining submodule 804b.

The first detection submodule 804a is configured to detect whether the text content of the communication message has a preset designator.

The determining submodule 804b is configured to determine the content of the preset designator as the user name corresponding to the number of the communication message sender if the first detection submodule 804a detects that the text content of the communication message has a preset designator.

In a possible embodiment, the analysis module 804 may comprise: a second detection submodule 804c and a first receiving submodule 804d.

The second detection submodule 804c is configured to detect whether the text content of a communication message has a preset designator.

The first receiving submodule 804d is configured to send both the content of the preset designator and the number of the sender to a server if the second detection submodule 804c detects that the text content of the communication message has a preset designator, and to receive the user name corresponding to the number of the sender fed back by the server. The user name is acquired by the server by making a comparison between the content of the preset designator and a user name in a name database.

In a possible embodiment, the analysis module 804 is configured to make a semantic analysis of the text content of a communication message and acquire an executor's name of the text content, and to determine the executor's name as the user name corresponding to the number of the communication message sender.

In a possible embodiment, the analysis module 804 may comprise: a partitioning submodule 804e, a sending submodule 804f and a second receiving submodule 804g.

The partitioning submodule 804e is configured to make a term partitioning of the text content of a communication message, thus acquiring at least one independent term.

The sending submodule 804f is configured to send at least the one independent term acquired from the partitioning submodule 804e upon term partitioning and the number of the sender to the server.

The second receiving submodule 804g is configured to receive the user name corresponding to the number of the sender fed back by the server. The user name is acquired by the server by making a comparison between the at least one independent term and a user name in a name database.

In a possible embodiment, the communication message recognition device further includes: a sending module 808.

The sending module 808 is configured to send the number of the sender and a corresponding relationship between the number of the sender and the user name corresponding to the number of the sender to the server for storing the corresponding relationship in a corresponding relational database including at least one set of corresponding relationship including a sender's number and a user name corresponding to the number of the sender.

The communication message recognition device described above, by acquiring a user name corresponding to a number of a sender who sends the communication message by receiving a communication message and analyzing the text content of the communication message, can determine the user name as the communication message sender's name and display it, thereby solving the problem that it is difficult to timely refresh a preset yellow page database thus leading to a high recognition error ratio, and reaching an effect of improving accuracy in recognition of communication messages.

With regard to the device in the above embodiments, detailed description of specific modes for conducting operation of modules has been made in the embodiments related to the method described above, no detailed illustration will be made herein. Furthermore, the present disclosure provides a communication message recognition device, available for realizing the communication message recognition method provided by the present disclosure. And the communication message recognition device includes: a processor and a memory configured to store instructions executable by the processor.

Wherein, the processor is configured to:
receive a communication message, which includes text content and communication message sender's number;
analyze the text content of the communication message and acquire a user name corresponding to the number of the communication message sender; and
determine the user name as the communication message sender's name and display the sender's name in the communication message.

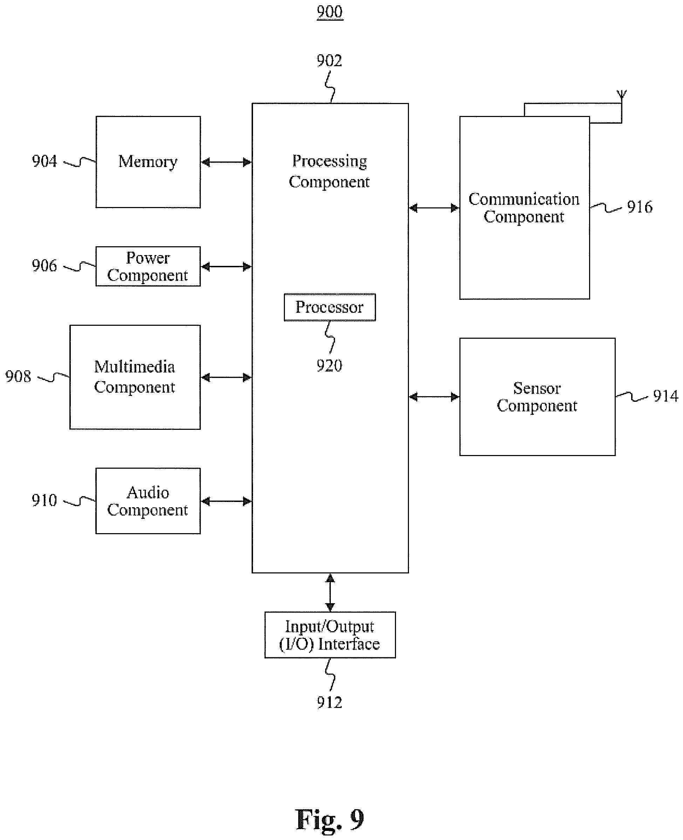

Fig. 9 is a block diagram of a communication message recognition device according to an exemplary embodiment. For example, the device 900 may be a mobile telephone, a computer, a digital broadcasting terminal, a message transceiver device, a games console, a tablet device, a medical device, a fitness facility, a PDA (personal digital assistant) and the like.

Referring to Fig. 9, the device 900 may include one or a plurality of components as below: a processor component 902, a memory 904, a power supply component 906, a multimedia component 908, an audio component 910, an input/output (I/O) interface 912, a sensor component 914 and a communication component 916.

The processor component 902 usually controls the overall operation of the device 900, for example, display, telephone call, data communication, and operation associated with camera operation and record operation. The processor component 902 may include one or a plurality of processors 918 for executing instructions so as to complete steps of above method in part or in whole. In addition, the processor component 902 may include one or a plurality of modules for the convenience of interaction between the processor component 902 and other components. For example, the processor component 902 may include a multimedia module for the convenience of interaction between the multimedia component 908 and the processor component 902.

The memory 904 is configured to store data of different types so as to support the operation of the device 900. Examples of the data include any application program or approach for operation of the device 900, including instructions, contact data, phonebook data, message, picture and video, etc. The memory 904 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 906 provides power for components of the device 900. The power supply component 906 may include a power management system, one or a plurality of power supplies, and other components associated with power generation, management and distribution of the device 900.

The multimedia component 908 includes a screen provided between the device 900 and a user for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 908 includes a front-facing camera and/or a rear-facing camera. When the device 900 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 910 is configured to output and/or input audio signal. For example, the audio component 910 includes a microphone (MIC); when the device 900 is under an operation mode such as call mode, record mode and speech recognition mode, the microphone is configured to receive external audio signal. The audio signal received may be further stored in the memory 904 or sent out by the communication component 916. In some embodiments, the audio component 910 also includes a loudspeaker for outputting audio signal.

The I/O interface 912 provides interface for the processor component 902 and peripheral interface modules, and the peripheral interface modules may be a keyboard, a click wheel and buttons, etc. These buttons may include but are not limited to: home button, volume button, start button and locking button.

The sensor component 914 includes one or a plurality of sensors for providing the device 900 with state evaluation from all aspects. For example, the sensor component 914 may detect the on/off state of the device 900, relative positioning of components, for example, the components are the displayer and keypads of the device 900; the sensor component 914 may also detect the position change of the device 900 or of a component thereof, the presence or absence of users' touch on the device 900, the direction or acceleration/deceleration of the device 900, and temperature variation of the device 900. The sensor component 914 may also include a proximity detector, which is configured to detect the presence of nearby objects in case of no physical touch. The sensor component 914 may also include an optical sensor, for example, CMOS or CCD image sensor for imaging. In some embodiments, the sensor component 914 may also include an acceleration sensor, a gyro sensor, a magnetic sensor, a pressure sensor, or a temperature sensor.

The communication component 916 is configured to facilitate wired communication or wireless communication between the device 900 and other equipment. The device 900 is available for access to wireless network based on communication standards, for example, WiFi, 2G or 3G, or combination thereof. In an exemplary embodiment, the communication component 916 receives by means of a broadcast channel the broadcast signal or broadcast-related information from external broadcast management systems. In an exemplary embodiment, the communication component 916 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 900 may be implemented by one or more application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above communication message recognition method.

In exemplary embodiments, there is also provided a non-transitory computer-readable storage medium including instructions, for example, a memory 904 including instructions, which may be executed by the processors 918 of the device 900 so as to achieve the above communication message recognition method. For example, the non-transitory computer-readable storage medium may be ROM, random access memory (RAM), CD-ROM, a magnetic tape, a floppy disk and an optical data storage device, etc.

## Claims

1. A communication message recognition method, comprising:
receiving (201, 301, 401, 501, 601) a communication message, which comprises text content and a number of a sender who sends the communication message;
analyzing (202) the text content of the communication message and acquiring a user name corresponding to the number of the communication message sender; and
determining (203, 304, 404, 505, 603) the user name as a name of the communication message sender and displaying the name of the sender in the communication message,
**characterized in that**, the step of analyzing (202) the text content of the communication message and acquiring a user name corresponding to the number of the communication message sender comprises:
detecting (402) whether the text content of the communication message has a preset designator for highlighting a certain text content; and
sending (403) both the certain text content of the preset designator and the number of the sender to a server if the text content of the communication message has the preset designator, and receiving the user name corresponding to the number of the sender fed back by the server, the user name being acquired by the server by making a comparison between the certain text content of the preset designator and a user name in a name database.

2. The method according to claim 1, wherein the method further comprises:
sending the number of the sender and a corresponding relationship between the number of the sender and the user name corresponding to the number of the sender to a server, the server being configured to store the corresponding relationship in a corresponding relational database comprising at least one set of corresponding relationship comprising a sender's number and a user name corresponding to the number of the sender.

3. A communication message recognition device, comprising:
a receiving module (702, 802), configured to receive a communication message comprising a text content and a number of a sender who sends the communication message;
an analysis module (704, 804), configured to analyze the text content of the communication message received by the receiving module (702, 802), and acquire a user name corresponding to the number of the communication message sender; and
a display module (706, 806), configured to determine the user name acquired by the analysis module (704, 804) upon analysis as a name of the communication message sender and to display the name of the sender in the communication message,
**characterized in that**, the analysis module (804) comprises:
a second detection submodule (804c), configured to detect whether the text content of the communication message has a preset designator for highlighting a certain text content; and
a first receiving submodule (804d), configured to send both the certain text content of the preset designator and the number of the sender to a server if the second detection submodule (804c) detects that the text content of the communication message has the preset designator, and to receive the user name corresponding to the number of the sender fed back by the server, the user name being acquired by the server by making a comparison between the certain text content of the preset designator and a user name in a name database.

4. The device according to claim 3, wherein the device further comprises:
a sending module (808), configured to send the number of the sender and a corresponding relationship between the number of the sender and the user name corresponding to the number of the sender to a server, the server being configured to store the corresponding relationship in a corresponding relational database comprising at least one set of corresponding relationship comprising a sender's number and a user name corresponding to the number of the sender.

5. A computer program, including instructions for executing all the steps of a communication message recognition method according to claim 1 or 2, when said program is executed by a computer.

6. A recording medium readable by a computer and having recorded thereon a computer program including instructions for executing all the steps of a communication message recognition method according to any one of claim 1 or 2.

## Patentansprüche

1. Verfahren zur Erkennung von Kommunikationsnachrichten, umfassend:
Empfangen (201, 301, 401, 501, 601) einer Kommunikationsnachricht, die einen Textinhalt und eine Nummer eines Absenders umfasst, der die Kommunikationsnachricht sendet,
Analysieren (202) des Textinhalts der Kommunikationsnachricht und Erlangen eines Benutzernamens, der der Nummer des Absenders der Kommunikationsnachricht entspricht, und
Bestimmen (203, 304, 404, 505, 603) des Benutzernamens als Name des Absenders der Kommunikationsnachricht und Anzeige des Namens des Absenders in der Kommunikationsnachricht,
**dadurch gekennzeichnet, dass** der Schritt des Analysierens (202) des Textinhalts der Kommunikationsnachricht und des Erlangens eines Benutzernamens, der der Nummer des Absenders der Kommunikationsnachricht entspricht, umfasst:
Erfassen (402), ob der Textinhalt der Kommunikationsnachricht einen voreingestellten Bezeichner zum Hervorheben eines bestimmten Textinhalts aufweist, und
Senden (403) sowohl des bestimmten Textinhalts des voreingestellten Bezeichners als auch der Nummer des Absenders an einen Server, wenn der Textinhalt der Kommunikationsnachricht den voreingestellten Bezeichner hat, und Empfangen des Benutzernamens, der der Nummer des Absenders entspricht, der von dem Server zurückgesendet wird, wobei der Benutzername von dem Server durch einen Vergleich zwischen dem bestimmten Textinhalt des voreingestellten Bezeichners und einem Benutzernamen in einer Namensdatenbank erlangt wird.

2. Verfahren nach Anspruch 1, wobei das Verfahren ferner umfasst:
Senden der Nummer des Absenders und einer entsprechenden Beziehung zwischen der Nummer des Absenders und dem Benutzernamen, der der Nummer des Absenders entspricht, an einen Server, wobei der Server dazu konfiguriert ist, die entsprechende Beziehung in einer entsprechenden relationalen Datenbank zu speichern, die mindestens einen Satz entsprechender Beziehungen umfasst, die eine Nummer des Absenders und einen Benutzernamen, der der Nummer des Absenders entspricht, umfassen.

3. Vorrichtung zur Erkennung von Kommunikationsnachrichten, umfassend:
ein Empfangsmodul (702, 802), das dazu konfiguriert ist, eine Kommunikationsnachricht zu empfangen, die einen Textinhalt und eine Nummer eines Senders umfasst, der die Kommunikationsnachricht sendet,
ein Analysemodul (704, 804), das dazu konfiguriert ist, den Textinhalt der von dem Empfangsmodul (702, 802) empfangenen Kommunikationsnachricht zu analysieren und einen der Nummer des Absenders der Kommunikationsnachricht entsprechenden Benutzernamen zu erlangen, und
ein Anzeigemodul (706, 806), das dazu konfiguriert ist, den von dem Analysemodul (704, 804) bei der Analyse erlangten Benutzernamen als einen Namen des Absenders der Kommunikationsnachricht zu bestimmen und den Namen des Absenders in der Kommunikationsnachricht anzuzeigen,
**dadurch gekennzeichnet, dass** das Analysemodul (804) umfasst:
ein zweites Erfassungssubmodul (804c), das dazu konfiguriert ist, zu erfassen, ob der Textinhalt der Kommunikationsnachricht einen voreingestellten Bezeichner zum Hervorheben eines bestimmten Textinhalts aufweist, und
ein erstes Empfangssubmodul (804d), das dazu konfiguriert ist, sowohl den bestimmten Textinhalt des voreingestellten Bezeichners als auch die Nummer des Absenders an einen Server zu senden, wenn das zweite Erfassungssubmodul (804c) erfasst, dass der Textinhalt der Kommunikationsnachricht den voreingestellten Bezeichner hat, und den Benutzernamen zu empfangen, der der Nummer des Absenders entspricht, die von dem Server zurückgesendet wird, wobei der Benutzername von dem Server erlangt wird, indem ein Vergleich zwischen dem bestimmten Textinhalt des voreingestellten Bezeichners und einem Benutzernamen in einer Namensdatenbank durchgeführt wird.

4. Vorrichtung nach Anspruch 3, wobei die Vorrichtung ferner umfasst:
ein Sendemodul (808), das dazu konfiguriert ist, die Nummer des Absenders und eine entsprechende Beziehung zwischen der Nummer des Absenders und dem Benutzernamen, der der Nummer des Absenders entspricht, an einen Server zu senden, wobei der Server dazu konfiguriert ist, die entsprechende Beziehung in einer entsprechenden relationalen Datenbank zu speichern, die mindestens einen Satz von entsprechenden Beziehungen umfasst, die eine Nummer des Absenders und einen Benutzernamen, der der Nummer des Absenders entspricht, umfassen.

5. Computerprogramm mit Befehlen zum Ausführen aller Schritte eines Verfahrens zur Erkennung von Kommunikationsnachrichten nach Anspruch 1 oder 2, wenn das Programm von einem Computer ausgeführt wird.

6. Aufzeichnungsmedium, das von einem Computer gelesen werden kann und auf dem ein Computerprogramm aufgezeichnet ist, das Anweisungen zur Ausführung aller Schritte eines Verfahrens zur Erkennung von Kommunikationsnachrichten nach einem der Ansprüche 1 oder 2 enthält.

## Revendications

1. Procédé de reconnaissance de message de communication, comprenant :
la réception (201, 301, 401, 501, 601) d'un message de communication, qui comprend un contenu textuel et un numéro d'un expéditeur qui envoie le message de communication ;
l'analyse (202) du contenu textuel du message de communication et acquérir un nom d'utilisateur correspondant au numéro de l'expéditeur de message de communication ; et
la détermination (203, 304, 404, 505, 603) du nom d'utilisateur comme nom de l'expéditeur de message de communication et afficher le nom de l'expéditeur dans le message de communication,
**caractérisé en ce que** l'étape de l'analyse (202) du contenu textuel du message de communication et d'acquisition d'un nom d'utilisateur correspondant au numéro de l'expéditeur de message de communication comprend :
le fait de détecter (402) si le contenu textuel du message de communication a un indicateur prédéfini pour mettre en surbrillance un certain contenu textuel ; et
l'envoi (403) à la fois dudit certain contenu textuel de l'indicateur prédéfini et du numéro de l'expéditeur à un serveur, si le contenu textuel du message de communication a l'indicateur prédéfini, et
la réception du nom d'utilisateur correspondant au numéro de l'expéditeur renvoyé par le serveur, le nom d'utilisateur étant acquis par le serveur en effectuant une comparaison entre ledit certain contenu textuel de l'indicateur prédéfini et un nom d'utilisateur dans une base de données de noms.

2. Procédé selon la revendication 1, dans lequel le procédé comprend en outre :
l'envoi du numéro de l'expéditeur et d'une relation correspondante entre le numéro de l'expéditeur et le nom d'utilisateur correspondant au numéro de l'expéditeur à un serveur, le serveur étant configuré pour stocker la relation correspondante dans une base de données relationnelle correspondante comprenant au moins un jeu de relation correspondante comprenant un numéro d'expéditeur et un nom d'utilisateur correspondant au numéro de l'expéditeur.

3. Dispositif de reconnaissance de messages de communication, comprenant :
un module de réception (702, 802), configuré pour recevoir un message de communication comprenant un contenu textuel et un numéro d'un expéditeur qui envoie le message de communication ;
un module d'analyse (704, 804), configuré pour analyser le contenu textuel du message de communication reçu par le module de réception (702, 802), et acquérir un nom d'utilisateur correspondant au numéro de l'expéditeur de message de communication ; et
un module d'affichage (706, 806), configuré pour déterminer le nom d'utilisateur acquis par le module d'analyse (704, 804) lors de l'analyse comme nom de l'expéditeur de message de communication et pour afficher le nom de l'expéditeur dans le message de communication,
**caractérisé en ce que**, le module d'analyse (804) comprend :
un deuxième sous-module de détection (804c), configuré pour détecter si le contenu textuel du message de communication a un indicateur prédéfini pour mettre en surbrillance un certain contenu textuel ; et
un premier sous-module de réception (804d), configuré pour envoyer à la fois ledit certain contenu textuel de l'indicateur prédéfini et le numéro de l'expéditeur à un serveur si le deuxième sous-module de détection (804c) détecte que le contenu textuel du message de communication a l'indicateur prédéfini, et pour recevoir le nom d'utilisateur correspondant au numéro de l'expéditeur renvoyé par le serveur, le nom d'utilisateur étant acquis par le serveur en effectuant une comparaison entre ledit certain contenu textuel de l'indicateur prédéfini et un nom d'utilisateur dans une base de données de noms.

4. Dispositif selon la revendication 3, dans lequel le dispositif comprend en outre :
un module d'envoi (808), configuré pour envoyer le numéro de l'expéditeur et une relation correspondante entre le numéro de l'expéditeur et le nom d'utilisateur correspondant au numéro de l'expéditeur à un serveur, le serveur étant configuré pour stocker la relation correspondante dans une base de données relationnelle correspondante comprenant au moins un jeu de relation correspondante comprenant un numéro d'expéditeur et un nom d'utilisateur correspondant au numéro de l'expéditeur.

5. Programme informatique, comportant des instructions pour exécuter toutes les étapes d'un procédé de reconnaissance de message de communication selon la revendication 1 ou 2, lorsque ledit programme est exécuté par un ordinateur.

6. Support d'enregistrement lisible par un ordinateur sur lequel est enregistré un programme informatique comportant des instructions pour exécuter toutes les étapes d'un procédé de reconnaissance de message de communication selon l'une quelconque des revendications 1 ou 2.
